# EUROPÄISCHE PATENTSCHRIFT

(11) **EP 3 353 413 B1**
(45) Veröffentlichungstag und Bekanntmachung des Hinweises auf die Patenterteilung: **11.09.2019**
(21) Anmeldenummer: 16744362.1
(22) Anmeldetag: 25.07.2016
(51) Int. Cl.: F02M 63/00, F02M 43/04, F02M 45/08

(54) **VORRICHTUNG ZUM DOSIEREN VON KRAFTSTOFFEN**
DEVICE FOR METERING FUEL
DISPOSITIF DE DOSAGE DE CARBURANTS

(30) Priorität: 23.09.2015 DE 102015218257
(43) Veröffentlichungstag der Anmeldung: 01.08.2018
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE)
(86) Internationale Anmeldenummer: PCT/EP2016/067676
(87) Internationale Veröffentlichungsnummer: WO 2017/050465

(56) Entgegenhaltungen:
- WO-A1-2012/171119
- WO-A1-2014/186892
- DE-A1-102014 225 167
- US-A1- 2015 267 659

## Beschreibung

Die Erfindung betrifft eine Vorrichtung zum Dosieren von Kraftstoffen, vorzugsweise zwei verschiedenen, flüssigen oder gasförmigen Kraftstoffen. Eine solche Vorrichtung findet beispielsweise bei der Einbringung von Kraftstoffen in den Brennraum einer Brennkraftmaschine Verwendung, beispielsweise bei Motoren, die mit verschiedenen Kraftstoffen entweder abwechselnd oder gleichzeitig betrieben werden können.

### Stand der Technik

Eine Vorrichtung zum Dosieren von zwei verschiedenen Kraftstoffen ist beispielsweise aus WO2014186892A1 bekannt. Diese Vorrichtung in Form eines Kraftstoffeinspritzventils weist zwei ineinander geführte Düsennadeln auf, wobei die äußere Düsennadel von einem gasförmigen Kraftstoff beaufschlagt ist und im Inneren der äußeren Düsennadel ein flüssiger Kraftstoff anliegt, beispielsweise Dieselkraftstoff. Im Inneren der äußeren Düsennadel ist ein Düsensitz ausgebildet, mit dem die innere Düsennadel zum Öffnen und Schließen innerer Einspritzöffnungen zusammenwirkt, so dass der Dieselkraftstoff bei einer Längsbewegung der inneren Düsennadel unabhängig vom Zustrom des gasförmigen Kraftstoffs dosiert werden kann. Soll gleichzeitig oder zeitlich beabstandet gasförmiger Kraftstoffe eingespritzt werden, so bewegt sich die äußere Ventilnadel von einem äußeren Ventilsitz weg und gibt Einspritzöffnungen im Düsenkörper frei, durch die der gasförmige Kraftstoff ausströmen kann. Lassen sich die innere Düsennadel und die äußere Düsennadel separat ansteuern, so kann sowohl gasförmiger als auch flüssiger Kraftstoff unabhängig voneinander eindosiert werden, was insbesondere bei der Eindosierung von Kraftstoff in eine entsprechende Brennkraftmaschine von Bedeutung ist, die mit zwei verschiedenen Kraftstoffen betrieben werden soll.

Die Fertigung einer solchen Vorrichtung ist jedoch aufwendig, da Einspritzöffnungen sowohl in die äußere Düsennadel eingebracht werden müssen, als auch in den Düsenkörper selbst, um die Durchströmung mit gasförmigem Kraftstoff zu ermöglichen. Sollen beide Kraftstoffe parallel in einen Brennraum eingebracht werden, so ergibt sich darüber hinaus die Schwierigkeit, dass die Einspritzöffnungen des flüssigen und des gasförmigen Kraftstoffs in einem festen räumlichen Verhältnis zueinander stehen müssen, um die Verbrennung optimal zu gestalten. Dies bedeutet, dass die äußere Düsennadel und die innere Düsennadel gegeneinander verdrehsicher gelagert sein müssen, was einen zusätzlichen technischen Aufwand bedeutet.

### Vorteile der Erfindung

Die erfindungsgemäße Vorrichtung zum Dosieren von zwei verschiedenen Kraftstoffen weist demgegenüber den Vorteil auf, dass die Fertigung dieser Vorrichtung gegenüber dem aus der Stand Technik bekannten einfacher ist und damit kostengünstiger. Dazu weist die Vorrichtung einen Düsenkörper auf, in dem ein mit einem ersten Kraftstoff befüllbarer erster Druckraum ausgebildet ist, in dem einen äußere Düsennadel längsverschiebbar aufgenommen ist. Dabei ist in der äußeren Düsennadel ein mit einem zweitem Kraftstoff befüllbarer zweiter Druckraum ausgebildet, in dem eine innere Düsennadel längsverschiebbar angeordnet ist, die mit einem in der äußeren Düsennadel ausgebildeten inneren Düsensitz zum Öffnen und Schließen wenigstens einer inneren Einspritzöffnung zusammenwirkt. Darüber hinaus ist eine äußere Einspritzöffnung vorgesehen, die mit dem ersten Druckraum verbindbar ist, wobei die wenigstens eine äußere Einspritzöffnung in der äußeren Düsennadel ausgebildet ist.

Durch die Ausbildung der äußeren Einspritzöffnung in der äußeren Düsennadel entfällt eine solche Einspritzöffnung im Düsenkörper, so dass diese einfacher und damit kostengünstiger herstellbar ist. Da die Düsennadel als separates Bauteil hergestellt wird, das ohnehin einer aufwendigen Bearbeitung bedarf, dabei jedoch bei der Bearbeitung von allen Seiten zugänglich ist, lassen sich die zusätzlichen Einspritzöffnungen problemlos in der äußeren Düsennadel ausbilden. Dabei ist zusätzlich der Vorteil gegeben, das die inneren Einspritzöffnungen und die äußeren Einspritzöffnungen den gewünschten räumlichen Zusammenhang fest beibehalten, ohne dass es einer zusätzlichen technischen Maßnahme bedarf, etwa einer Verdrehsicherung der Düsennadeln im Düsenkörper. Darüber hinaus ergibt sich der Vorteil, dass die äußere Düsennadel durch ihre Öffnungsbewegung innerhalb der Vorrichtung auch den Einblasstrahl des gasförmigen Kraftstoffs bzw. eines der beiden Kraftstoffe während der Einblasung bzw. Einspritzung bewegt, was eine zusätzliche Verwirbelung des Kraftstoffs innerhalb der Brennkammer begünstigt und damit einen günstigeren Brennverlauf.

In einer ersten vorteilhaften Ausgestaltung ist im Düsenkörper ein äußerer Düsensitz ausgebildet, mit dem die äußere Düsennadel zum Öffnen und Schließen der wenigstens einen äußeren Einspritzöffnung zusammenwirkt. Dadurch lassen sich durch eine einfache Längsbewegung der äußeren Düsennadel die äußeren Einspritzöffnungen öffnen und schließen und damit der erste Kraftstoff entsprechend dosieren.

In einer weiteren vorteilhaften Ausgestaltung ist an der Außenseite der äußeren Düsennadel eine umlaufende Ringnut ausgebildet, von der die wenigstens eine äußere Einspritzöffnung ausgeht. Damit ist die umlaufende Ringnut vorzugsweise stromabwärts des äußeren Düsensitzes ausgebildet, so dass sie vom ersten Kraftstoff, der im ersten Druckraum ansteht, beim Abheben der äußeren Düsennadel vom äußeren Ventilsitz mit dem ersten Kraftstoff befüllt wird, von wo der Kraftstoff dann durch die äußeren Einspritzöffnungen ausgespritzt wird.

In einer weiteren vorteilhaften Ausgestaltung weist der Düsenkörper an seinem dem äußeren Düsensitz zugewandten Ende einen zylindrischen Führungsabschnitt auf, in dem die äußere Düsennadel geführt ist. Damit ist sichergestellt, dass die Düsennadel bezüglich des äußeren Ventilsitzes stets exakt positionier ist und damit optimal an diesem Ventilsitz dichtet. Dabei weist die äußere Ventilnadel in vorteilhafter Weise einen zylindrischen Abschnitt auf, mit dem sie im zylindrischen Führungsabschnitt geführt ist. Besonders vorteilhaft ist dabei auch die Ausbildung des äußeren Dichtsitzes im Düsenkörper als konische Fläche, die eine gute Dichtung gewährt. Durch die Längsbewegung der äußeren Düsennadel vom äußeren Düsensitz weg, wird so in vorteilhafter Weise ein Strömungsquerschnitt zwischen der äußeren Düsennadel und dem äußeren Düsensitz aufgesteuert, durch den Kraftstoff aus dem ersten Druckraum zu der wenigstens einen äußeren Einspritzöffnung strömen kann.

In einer weiteren vorteilhaften Ausgestaltung begrenzt die äußere Düsennadel mit ihrem dem äußeren Düsensitz abgewandten Ende einen ersten Steuerraum, der mit Kraftstoff befüllbar ist. Dies kann sowohl der erste als auch der zweite Kraftstoff sein, jedoch kommt dafür in der Regel nur ein flüssiger Kraftstoff in Frage, da ein gasförmiger Kraftstoff zu kompressibel ist. Dabei ist in vorteilhafter Weise im Steuerraum durch ein erstes Steuerventil ein wechselnder Druck einstellbar, so dass die hydraulische Schließkraft auf die äußere Düsennadel variiert und damit ihre Längsbewegung gesteuert werden kann.

In einer weiteren vorteilhaften Ausgestaltung begrenzt die innere Düsennadel mit ihrem dem inneren Düsensitz abgewandten Ende einen zweiten Steuerraum, der ebenfalls mit dem ersten oder zweiten Kraftstoff befüllbar ist. In vorteilhafter Weise ist ein zweites Steuerventil vorhanden, über das ein wechselnden Druck im zweiten Steuerraum einstellbar ist, so dass die Längsbewegung der inneren Düsennadel durch das zweite Steuerventil gesteuert werden kann.

Weitere Vorteile und vorteilhafte Ausgestaltungen sind der Beschreibung und der Zeichnung entnehmbar.

### Zeichnung

In der Zeichnung ist eine erfindungsgemäße Vorrichtung dargestellt. Es zeigt:
- Figur 1: einen Längsschnitt durch eine erfindungsgemäße Vorrichtung in einer schematischen Darstellung, wobei nur die wesentlichen Bauteile dargestellt sind, und
- Figur 2: eine vergrößere Darstellung des unteren, die Einspritzöffnungen aufweisenden Endes der erfindungsgemäßen Vorrichtung.

### Beschreibung des Ausführungsbeispiels

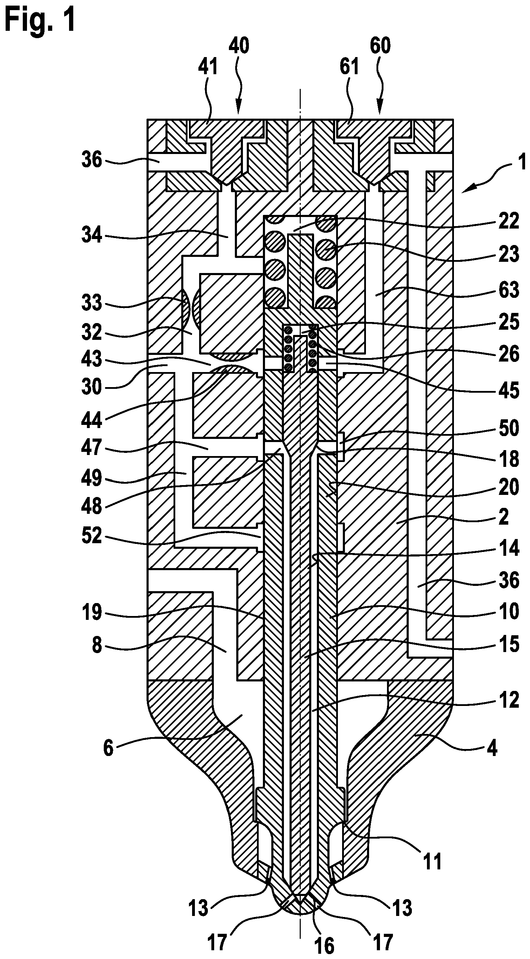

In **Figur 1** ist ein Längsschnitt durch eine erfindungsgemäße Vorrichtung zum Dosieren von zwei verschiedenen Kraftstoffen dargestellt. Die Vorrichtung in Form eines Kraftstoffeinspritzventils weist ein Gehäuse 1 auf, das einen Haltekörper 2 und einen Düsenkörper 4 umfasst, wobei der Haltekörper 2 und der Düsenkörper 4 durch eine in der Zeichnung nicht dargestellte Vorrichtung fest gegeneinander verspannt sind. Im Düsenkörper 4 ist ein erster Druckraum 6 ausgebildet, der mit einem ersten Kraftstoff über einen ersten Zulaufkanal 8 befüllbar ist, der im Haltekörper 2 ausgebildet ist. Der erste Kraftstoff ist hierbei vorzugsweise ein gasförmiger Kraftstoff. Im ersten Druckraum 6 ist eine äußere Düsennadel 10 längsverschiebbar aufgenommen, die sich bis in eine im Haltekörper 2 ausgebildete Bohrung 20 fortsetzt. Die äußere Düsennadel 10 ist dabei als Hohlnadel ausgeführt und weist in ihrem Inneren eine Längsbohrung 14 auf, in der eine innere Düsenadel 15 längsverschiebbar aufgenommen ist. Die innere Düsennadel 15 wirkt dabei mit einem inneren Düsensitz 16 zusammen, der im Inneren der äußeren Düsennadel 10 ausgebildet ist, so dass durch das Zusammenwirken der inneren Düsennadel 15 mit dem inneren Ventilsitz 16 eine oder mehrere innere Einspritzöffnungen 17 auf- und zugesteuert werden können. Zwischen der inneren Düsennadel 15 und der äußeren Düsennadel 10 verbleibt ein zweiter Druckraum 12, der mit einem zweiten Kraftstoff befüllt werden kann, beispielsweise mit einem gasförmigen Kraftstoff.

Die äußere Düsennadel 10 wirkt mit einem äußeren Düsensitz 11 zusammen, der im Inneren des Düsenkörpers 4 ausgebildet ist. Bei Anlage der äußeren Düsennadel 10 auf dem äußeren Düsensitz 11 wird der Druckraum 6 verschlossen, während beim Abheben der äußeren Düsennadel 10 vom äußeren Düsensitz 11 der Kraftstoff aus dem ersten Druckraum 6 zwischen der äußeren Düsennadel 10 und dem äußeren Düsensitz 11 hindurch zu den äußeren Einspritzöffnungen 13 strömt, die in der äußeren Düsennadel 10 ausgebildet sind.

Der zweite Kraftstoff zur Befüllung des zweiten Druckraums 12 wird dem Gehäuse 1 über einen Hochdruckzulaufkanal 30 zugeführt, der im Haltekörper 2 ausgebildet ist. Dieser zweite Kraftstoff, der beispielsweise ein flüssiger Kraftstoff ist, insbesondere Diesel oder Benzin, gelangt von dort in verschiedene Kanäle und so den zweiten Druckraum 12, stellt aber auch den Steuerdruck zur Steuerung der Schließkraft auf die innere wie die äußere Düsennadel zur Verfügung, so dass deren Längsbewegung servohydraulisch gesteuert werden kann. Die einzelnen Kanäle im Haltekörper 2 und ihre Funktion sind wie folgt.

Zur Steuerung der Nadelbewegung der äußeren Ventilnadel 15 ist ein erster Steuerraum 22 vorgesehen, der von der Bohrung 20 und der den äußeren Einspritzöffnungen 13 abgewandten Stirnseite der äußeren Düsennadel 10 begrenzt wird. In dem ersten Steuerraum 22 ist eine äußere Schließfeder 23 unter Druckvorspannung angeordnet, die eine in Richtung auf den äußeren Düsensitz 11 gerichtete Schließkraft auf die äußere Düsennadel 10 ausübt. Zur Befüllung des ersten Steuerraums 22 dient eine Steuerbohrung 32, die vom Hochdruckzulaufkanal 30 abzweigt und in der eine Drossel 33 ausgebildet ist. Zur Entlastung des Drucks im ersten Steuerraum 22 dient eine Ablaufbohrung 34, die von der Steuerbohrung 32 ausgeht und die zu einem ersten Steuerventil 40 führt. Das erste Steuerventil 40 beinhaltet ein erstes Steuerventilelement 41, das mittels eines Elektromagneten bewegbar ist und das einen Ablaufquerschnitt zwischen der Ablaufbohrung 34 und der Niederdruckleitung 36 öffnet und schließt. Die im Bild auf der linken Seite dargestellte Niederdruckleitung 36 ist dabei identisch mit der Niederdruckleitung 36 im rechten Teil der Zeichnung der Figur 1, wobei die Verbindung in der Zeichnung der Einfachheit halber nicht dargestellt ist. Die Niederdruckleitung 36 ist dabei mit einem in der Zeichnung ebenfalls nicht dargestellten Niederdruckraum verbunden, in dem stets ein niedriger Kraftstoffdruck herrscht.

Vom Hochdruckzulaufkanal 30 zweigt weiter eine Zulaufbohrung 43 ab, in der eine Zulaufdrossel 44 ausgebildet ist, so dass der durch sie strömende zweite Kraftstoff über Querbohrungen 45, die in der äußeren Düsennadel 10 ausgebildet sind, in einen Steuerraum 25 strömt, der innerhalb der äußeren Düsennadel 10 ausgebildet ist und der durch die den inneren Einspritzöffnungen 17 abgewandte Stirnseite der inneren Düsennadel 15 begrenzt wird. Innerhalb des zweiten Steuerraums 20 ist eine innere Schließfeder 26 unter Druckvorspannung angeordnet, die eine in Richtung auf den inneren Düsensitz 16 gerichtete Schließkraft auf die innere Düsennadel 15 ausübt. Über eine weitere Querbohrung 45 in der äußeren Düsennadel 10 kann der Kraftstoff weiter in eine zweite Ablaufbohrung 63 strömen und von dort zu einem zweiten Steuerventil 60, das als elektromagnetisches Steuerventil ausgebildet ist. Das zweite Steuerventil 60 umfasst dabei ein zweites Steuerventilelement 61, dass durch einen Elektromagneten bewegbar ist und dadurch einen Ablaufquerschnitt auf und zusteuert, über den die zweite Ablaufbohrung 63 mit der Niederdruckleitung 36 verbindbar ist.

Zur Versorgung des zweiten Druckraums 12 mit Kraftstoff unter hohem Druck dient eine weitere Versorgungsbohrung 49, die ebenfalls vom Hochdruckzulaufkanal 30 abzweigt und wiederum in eine Versorgungsbohrung 47 mündet. Die Versorgungsbohrung 47 ist als Querbohrung innerhalb des Haltekörpers 2 ausgebildet und verbindet den Hochdruckzulaufkanal 30 mit einer weiteren Querbohrung 48, die in der äußeren Düsennadel 10 ausgebildet ist, wobei die weitere Querbohrung 48 in den zweiten Druckraum 12 mündet, so dass eine Befüllung des zweiten Druckraums 12 gewährleistet ist. Dabei ist in der Bohrung 20 eine erste Ringnut 50 ausgebildet, in die die Versorgungsbohrung 47 mündet, so dass stets eine hydraulische Verbindung zwischen der Versorgungsbohrung 47 und der weiteren Querbohrung 48 besteht, unabhängig von der Längsposition der äußeren Ventilnadel 10.

Um die äußere Düsennadel 10 bei ihrer Bewegung innerhalb der Bohrung mit einer Gleitfilm an der Außenseite zu versehen, der durch die ersten Kraftstoff bewirkt wird, weist die Bohrung 20 weiterhin eine zweite Ringnut 52 auf, die zwischen der ersten Ringnut 50 und dem ersten Druckraum 6 ausgebildet ist. In die zweite Ringnut 52 mündet die weitere Versorgungsbohrung 49, so dass hier Kraftstoff unter einem relativ hohen Druck anliegt. Der erste Kraftstoff, der hier anliegt, ist ein flüssiger Kraftstoff, so dass ein Druckgefälle besteht und zwischen der zweiten Ringnut 52 und dem ersten Druckraum 6 ein stetiger Leckagestrom über einen Leckagespalt 19, der zwischen der äußeren Düsennadel 10 und der Wand der Bohrung 20 ausgebildet ist, gewährleistet ist. Der in der ersten Druckraum 6 fließende flüssige Kraftstoff wird beim Öffnen der äußeren Düsennadel 10 mit dem ersten Kraftstoff mitgerissen und gelangt somit ebenfalls in den Brennraum der entsprechenden Brennkraftmaschine, ohne dass es dadurch zu negativen Auswirkungen auf die Verbrennung kommt. Durch eine entsprechend kleine Dimensionierung des Drosselspalts 19 ist sicher gestellt, dass die in den ersten Druckraum 6 einfließende Kraftstoffmenge an flüssigem Kraftstoff problemlos über die äußeren Einspritzöffnungen 13 mit in den Brennraum gelangt.

Die Funktion der Vorrichtung zum Dosieren von zwei verschiedenen Kraftstoffen funktioniert wie folgt:
Zu Beginn der Kraftstoffeinbringung herrscht im ersten Druckraum 6 ein für den ersten Kraftstoff geeignetes Druckniveau, das bei einem flüssigen Kraftstoff, beispielsweise Erdgas, wenigstens einige bar beträgt. In dem Bereich der Vorrichtung, die mit dem flüssigen Kraftstoff befüllt ist, herrscht ein höherer Einspritzdruck, der bei der Verwendung von Dieselkraftstoff wenigstens einige hundert bar beträgt, aber es sind auch Drücke von bis zu 2500 bar möglich, oder auch höher. Durch den hohen Druck sowohl im ersten Steuerraum 22 als auch im zweiten Steuerraum 25 ist gewährleistet, dass sowohl die innere Düsennadel 15 als auch die äußere Düsennadel 10 in Anlage an den jeweiligen Düsensitzen sind und sowohl die inneren Einspritzöffnungen 17 als auch die äußeren Einspritzöffnungen 13 verschließen. Soll eine Einspritzung nur mit flüssigem Kraftstoff geschehen, so wird nur das zweite Steuerventil 60 geöffnet, so dass der zweite Steuerraum 25 entlastet wird durch seine jetzt offene Verbindung mit der Niederdruckleitung 36, wodurch der hydraulische Druck im zweiten Steuerraum 25 abnimmt und entsprechend die hydraulische Schließkraft auf die innere Düsennadel 10. Angetrieben vom Kraftstoffdruck im zweiten Druckraum 12 bewegt sich daraufhin die innere Düsennadel 15 entgegen der Kraft der inneren Schließfeder 26 vom inneren Düsensitz 16 weg und gibt die inneren Einspritzöffnungen 17 frei, so dass Kraftstoff aus dem zweiten Druckraum 12 durch die inneren Einspritzöffnungen 17 austritt und aufgrund des hohen Kraftstoffdrucks fein zerstäubt wird. Nach dem Schließen des zweiten Steuerventils 60 baut sich im zweiten Steuerraum 25 aufgrund der Verbindung über die Durchlaufbohrung 43 wieder der ursprünglich hohe Kraftstoffdruck auf, durch den innere Düsennadel 15 wieder zurück in ihre Schließstellung gedrückt wird und die innere Einspritzöffnungen 17 verschließt.

Soll auch oder nur die äußere Düsennadel 10 bewegt werden, so wird hingegen das erste Steuerventil 40 geöffnet, so dass der Druck im ersten Steuerraum 22 durch die Verbindung über die Ablaufbohrung 34 zusammenbricht. Der daraufhin ebenfalls abnehmende hydraulische Schließdruck innerhalb des ersten Steuerraum 22 erlaubt jetzt eine Bewegung der äußeren Düsennadel 10 aufgrund des Drucks im ersten Druckraum 6, so dass die äußere Düsennadel 10 vom äußeren Düsensitz abhebt und gasförmiger Kraftstoff aus dem ersten Druckraum 6 zu den äußeren Einspritzöffnungen 13 strömt. Nach Schließen des ersten Steuerventils 40 baut sich wiederum der ursprüngliche Zustand auf und die äußere Düsennadel 10 verschließt die äußere Einspritzöffnung 13.

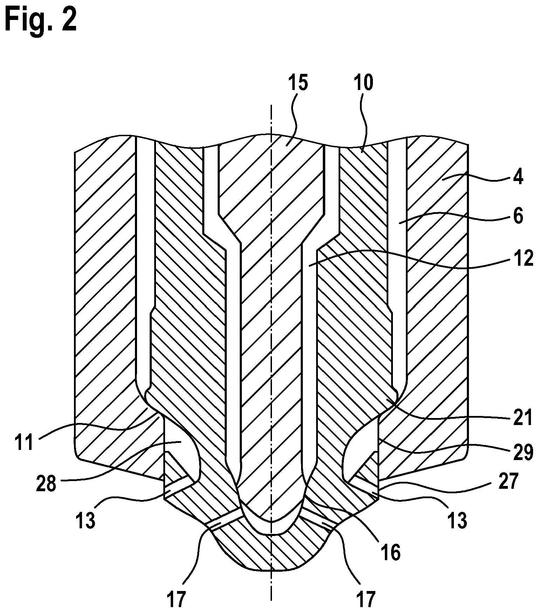

Die genaue Ausgestaltung der Düsensitze ist in Figur 2 nochmals vergrößert dargestellt. Der Düsenkörper 4 weist an seinem dem Brennraum zugewandten Ende einen zylindrischen Führungsabschnitt 29 auf, in dem die äußere Düsennadel 10 mit einem ebenfalls zylindrischen Abschnitt 27 geführt ist. Zwischen dem äußeren Düsensitz 11 und den äußeren Einspritzöffnungen 13 ist an der Außenseite der äußeren Düsennadel 10 eine umlaufende Ringnut 28 ausgebildet. Von der Ringnut 28 führen die äußeren Einspritzöffnungen 13 ab, so dass gasförmiger Kraftstoff, der aus dem ersten Druckraum 6 zwischen dem äußeren Düsensitz 11 und der äußeren Düsennadel 10 hindurch in die Ringnut 28 strömt, von dort durch die äußeren Einspritzöffnungen 13 ausströmt. Es sind also sowohl die äußeren Einspritzöffnungen 13 als auch die inneren Einspritzöffnungen 17 innerhalb der äußeren Ventilnadel 10 ausgebildet, so dass die Einspritzöffnungen 13, 17 in einem festen räumlichen Verhältnis zueinander angeordnet sind, das während des gesamten Betriebs konstant bleibt. Beispielsweise können jeweils eine äußere Einspritzöffnung 13 und eine innere Einspritzöffnung 17 übereinander angeordnet werden, so dass sie in einer Längsebene des Kraftstoffeinspritzventils angeordnet sind, sie können aber auch versetzt zueinander angeordnet werden. Auch die Anzahl der äußeren und inneren Einspritzöffnungen 13, 17 kann beliebig gewählt werden. Gleichfalls wird der Durchmesser der Einspritzöffnungen in aller Regel verschieden sein, da durch die äußeren Einspritzöffnungen 13 gasförmiger Kraftstoff eingedüst werden wird, was einen relativ großen Störmungsquerschnitt erfordert, während die Einspritzung von flüssigem Kraftstoff, beispielsweise Diesel, aus dem zweiten Druckraum 12 durch die inneren Einspritzöffnungen 17 mit hohem Druck und mit einem niedrigen Querschnitt der Einspritzöffnungen einhergeht, um eine zuverlässige Zerstäubung des Kraftstoffs und damit eine sichere Verbrennung zu gewährleisten.

## Patentansprüche

1. Vorrichtung zum Dosieren von zwei verschiedenen, flüssigen oder gasförmigen Kraftstoffen mit einem Düsenkörper (4), in dem ein mit einem ersten Kraftstoff befüllbarer, erster Druckraum (6) ausgebildet ist, in dem eine äußere Düsennadel (10) längsverschiebbar aufgenommen ist, wobei in der äußeren Düsennadel (10) ein mit einem zweiten Kraftstoff befüllbarer zweiter Druckraum (12) ausgebildet ist, in dem eine innere Düsennadel (15) längsverschiebbar angeordnet ist, die mit einem in der äußeren Düsennadel (10) ausgebildeten inneren Düsensitz (16) zum Öffnen und Schließen wenigstens einer inneren Einspritzöffnung (17) zusammenwirkt, und mit wenigstens einer äußeren Einspritzöffnung (13), die mit dem ersten Druckraum (6) verbindbar ist, **dadurch gekennzeichnet, dass** die wenigstens eine äußere Einspritzöffnung (13) in der äußeren Düsennadel (10) ausgebildet ist.

2. Vorrichtung nach Anspruch 1, **dadurch gekennzeichnet, dass** im Düsenkörper (4) ein äußerer Düsensitz (11) ausgebildet ist, mit dem die äußere Düsennadel (10) zum Öffnen und Schließen der wenigstens einen äußeren Einspritzöffnung (13) zusammenwirkt.

3. Vorrichtung nach Anspruch 2, **dadurch gekennzeichnet, dass** stromabwärts des äußeren Düsensitzes (11) an der Außenseite der äußeren Düsennadel (10) eine umlaufende Ringnut (28) ausgebildet ist, von der die wenigstens eine äußere Einspritzöffnung (13) ausgeht.

4. Vorrichtung nach Anspruch 2 oder 3, **dadurch gekennzeichnet, dass** der Düsenkörper (4) an seinem dem äußeren Düsensitz (11) zugewandten Ende einen zylindrischen Führungsabschnitt (29) aufweist, in dem die äußere Düsennadel (10) geführt ist.

5. Vorrichtung nach Anspruch 4, **dadurch gekennzeichnet, dass** die äußere Ventilnadel (10) einen zylindrischen Abschnitt (27) aufweist, mit dem die äußere Ventilnadel (10) im zylindrischen Führungsabschnitt (29) geführt ist.

6. Vorrichtung nach einem der Ansprüche 2 bis 5, **dadurch gekennzeichnet, dass** der äußere Dichtsitz (11) im Düsenkörper (4) als konische Fläche ausgebildet ist.

7. Vorrichtung nach einem der Ansprüche 2 bis 5, **dadurch gekennzeichnet, dass** durch die Längsbewegung der äußeren Düsennadel (10) vom äußeren Düsensitz (11) weg einen Strömungsquerschnitt zwischen der äußeren Düsennadel (10) und dem äußeren Düsensitz (11) aufgesteuert wird, durch den Kraftstoff aus dem ersten Druckraum (6) zu der wenigstens einen äußeren Einspritzöffnung (13) strömen kann.

8. Vorrichtung nach einem der Ansprüche 2 bis 6, **dadurch gekennzeichnet, dass** die äußere Düsennadel (10) mit ihrem dem äußeren Düsensitz (11) abgewandten Ende einen ersten Steuerraum (22) begrenzt, der mit dem ersten Kraftstoff befüllbar ist.

9. Vorrichtung nach Anspruch 8, **dadurch gekennzeichnet, dass** im ersten Steuerraum (22) durch ein erstes Steuerventil (40) ein wechselnder Druck einstellbar ist.

10. Vorrichtung nach einem der Ansprüche 1 bis 9, **dadurch gekennzeichnet, dass** die innere Düsennadel (15) mit ihrem dem inneren Düsensitz (16) abgewandten Ende einen zweiten Steuerraum (25) begrenzt, der mit dem zweiten Kraftstoff befüllbar ist.

11. Vorrichtung nach Anspruch 10, **dadurch gekennzeichnet, dass** im zweiten Steuerraum (25) durch ein zweites Steuerventil (60) ein wechselnder Druck einstellbar ist.

12. Vorrichtung nach einem der Ansprüche 1 bis 11, **dadurch gekennzeichnet, dass** der erste Kraftstoff gasförmig und der zweite Kraftstoff flüssig ist.

13. Vorrichtung nach einem der Ansprüche 1 bis 12, **dadurch gekennzeichnet, dass** die Vorrichtung zum Einbringen von Kraftstoff direkt in einem Brennraum einer Brennkraftmaschine geeignet ist.

## Claims

1. Device for metering two different liquid or gaseous fuels, with a nozzle body (4) in which a first pressure chamber (6) is formed which can be filled with a first fuel and in which an outer nozzle needle (10) is received in a longitudinally movable manner, wherein the outer nozzle needle (10) is equipped with a second pressure chamber (12) which can be filled with a second fuel and in which an inner nozzle needle (15) is arranged in a longitudinally movable manner, said inner nozzle needle cooperating with an inner nozzle seat (16) formed in the outer nozzle needle (10) in order to open and close at least one inner injection opening (17), and with at least one outer injection opening (13) which can be connected to the first pressure chamber (6), **characterized in that** the at least one outer injection opening (13) is formed in the outer nozzle needle (10).

2. Device according to Claim 1, **characterized in that** the nozzle body (4) is equipped with an outer nozzle seat (11) with which the outer nozzle needle (10) cooperates in order to open and close the at least one outer injection opening (13).

3. The device according to Claim 2, **characterized in that** a circumferential ring groove (28) is formed on the outside of the outer nozzle needle (10) downstream of the outer nozzle seat (11), from which groove the at least one outer injection opening (13) departs.

4. The device according to Claim 2 or 3, **characterized in that** on its end facing the outer nozzle seat (11), the nozzle body (4) has a cylindrical guide portion (29) in which the outer nozzle needle (10) is guided.

5. The device according to Claim 4, **characterized in that** the outer valve needle (10) has a cylindrical portion (27) via which the outer valve needle (10) is guided in the cylindrical guide portion (29).

6. The device according to Claims 2 to 5, **characterized in that** the outer sealing seat (11) in the nozzle body (4) is formed as a conical surface.

7. The device according to Claims 2 to 5, **characterized in that** by the longitudinal movement of the outer nozzle needle (10) away from the outer nozzle seat (11), a flow cross-section is created between the outer nozzle needle (10) and the outer nozzle seat (11), through which the fuel can flow from the first pressure chamber (6) to the at least one outer injection opening (13).

8. The device according to Claims 2 to 6, **characterized in that** with its end facing away from the outer nozzle seat (11), the outer nozzle needle (10) delimits a first control chamber (22) which can be filled with the first fuel.

9. The device according to Claim 8, **characterized in that** a varying pressure can be set in the first control chamber (22) via a first control valve (40) .

10. The device according to Claims 1 to 9, **characterized in that** with its end facing away from the inner nozzle seat (16), the inner nozzle needle (15) delimits a second control chamber (25) which can be filled with the second fuel.

11. The device according to Claim 10, **characterized in that** a varying pressure can be set in the second control chamber (25) via a second control valve (60) .

12. The device according to Claims 1 to 11, **characterized in that** the first fuel is gaseous and the second fuel is liquid.

13. The device according to Claims 1 to 12, **characterized in that** the device is suitable for delivering fuel directly into a combustion chamber of an internal combustion engine.

## Revendications

1. Dispositif de dosage de deux carburants liquides ou gazeux différents, comprenant un corps d'injecteur (4) dans lequel est formée une première chambre de pression (6) pouvant être remplie d'un premier carburant, dans laquelle une aiguille d'injecteur extérieure (10) est reçue de manière déplaçable longitudinalement, dans lequel, dans l'aiguille d'injecteur extérieure (10), une deuxième chambre de pression (12) pouvant être remplie d'un deuxième carburant est formée, dans laquelle une aiguille d'injecteur intérieure (15) est disposée de manière déplaçable longitudinalement, laquelle coopère avec un siège d'injecteur intérieur (16) formé dans l'aiguille d'injecteur extérieure (10) pour ouvrir et fermer au moins une ouverture d'injection intérieure (17), et au moins une ouverture d'injection extérieure (13) qui peut être reliée à la première chambre de pression (6), **caractérisé en ce que** ladite au moins une ouverture d'injection extérieure (13) est formée dans l'aiguille d'injecteur extérieure (10).

2. Dispositif selon la revendication 1, **caractérisé en ce qu'**un siège d'injecteur extérieur (11) est formé dans le corps d'injecteur (4), siège d'injecteur avec lequel l'aiguille d'injecteur extérieure (10) coopère pour ouvrir et fermer ladite au moins une ouverture d'injection extérieure (13).

3. Dispositif selon la revendication 2, **caractérisé en ce qu'**une rainure annulaire périphérique (28) est formée en aval du siège d'injecteur extérieur (11) sur le côté extérieur de l'aiguille d'injecteur extérieure (10), rainure annulaire à partir de laquelle part ladite au moins une ouverture d'injection extérieure (13).

4. Dispositif selon la revendication 2 ou 3, **caractérisé en ce que** le corps d'injecteur (4) comprend, à son extrémité tournée vers le siège d'injecteur extérieur (11), une partie de guidage cylindrique (29) dans laquelle l'aiguille d'injecteur extérieure (10) est guidée.

5. Dispositif selon la revendication 4, **caractérisé en ce que** l'aiguille de soupape extérieure (10) comprend une partie cylindrique (27) à l'aide de laquelle l'aiguille de soupape extérieure (10) est guidée dans la partie de guidage cylindrique (29).

6. Dispositif selon l'une des revendications 2 à 5, **caractérisé en ce que** le siège d'étanchéité extérieur (11) est formé dans le corps d'injecteur (4) sous forme de surface conique.

7. Dispositif selon l'une des revendications 2 à 5, **caractérisé en ce qu'**une section transversale d'écoulement entre l'aiguille d'injecteur extérieure (10) et le siège d'injecteur extérieur (11) est commandée par le déplacement longitudinal de l'aiguille d'injecteur extérieure (10) à l'écart du siège d'injecteur extérieur (11), section transversale d'écoulement à travers laquelle du carburant peut s'écouler à partir de la première chambre de pression (6) jusqu'à ladite au moins une ouverture d'injection extérieure (13).

8. Dispositif selon l'une des revendications 2 à 6, **caractérisé en ce que** l'aiguille d'injecteur extérieure (10) délimite, par son extrémité opposée au siège d'injecteur extérieur (11), une première chambre de commande (22) qui peut être remplie du premier carburant.

9. Dispositif selon la revendication 8, **caractérisé en ce qu'**une pression variable peut être réglée dans la première chambre de commande (22) au moyen d'une première soupape de commande (40).

10. Dispositif selon l'une des revendications 1 à 9, **caractérisé en ce que** l'aiguille d'injecteur intérieure (15) délimite, par son extrémité opposée au siège d'injecteur intérieur (16), une deuxième chambre de commande (25) qui peut être remplie du deuxième carburant.

11. Dispositif selon la revendication 10, **caractérisé en ce qu'**une pression variable peut être réglée dans la deuxième chambre de commande (25) au moyen d'une deuxième soupape de commande (60).

12. Dispositif selon l'une des revendications 1 à 11, **caractérisé en ce que** le premier carburant est gazeux et le deuxième carburant est liquide.

13. Dispositif selon l'une des revendications 1 à 12, **caractérisé en ce que** le dispositif est approprié à l'introduction de carburant directement dans une chambre de combustion d'un moteur à combustion interne.
